## Europäisches Patentamt

(19) **European Patent Office**

**Office européen des brevets**

(11) Numéro de publication: **0 002 983 B2**

(12) **NOUVEAU FASCICULE DE BREVET EUROPEEN**

(45) Date de publication du nouveau fascicule du brevet:
21.11.84

(51) Int. Cl.³: **H 02 M 3/335,** H 02 P 13/22, H 04 N 3/18

(21) Numéro de dépôt: **78400243.8**

(22) Date de dépôt: **15.12.78**

(54) Circuit de commande de puissance et alimentation à découpage l'utilisant.

(30) Priorité: **29.12.77 FR 7739611**

(43) Date de publication de la demande:
**11.07.79 Bulletin 79/14**

(45) Mention de la délivrance du brevet:
**05.08.81 Bulletin 81/31**

(45) Mention de la décision concernant l'opposition:
**21.11.84 Bulletin 84/47**

(84) Etats contractants désignés:
**BE DE GB NL**

(56) Documents cités:
**FR - A - 1 454 422**
**FR - A - 2 246 002**
**FR - A - 2 285 744**
**US - A - 3 792 341**

**Valvo, Technische Informationen für die Industrie, No. 761027, Article "Schalt-Netzteile mit Transistoren der Reihe BUX 80"**
**Valvo, Technische Informationen für die Industrie, No. 770415, Article "Steuer-und Regelschaltung TDA 1060 für Schaltnetzteile"**
**Funkschau, 1975, No. 5, Pages 40-43, Article de Dangschat et al, "Ein Sperrwandler-Netzmodul mit Netztrennung"**
**Siemens, Schaltungen mit Halbleiterbauelementen", Vol. 5, NF/HiFi, HF und**

(73) Titulaire: **THOMSON-CSF, 173, Boulevard Haussmann, F-75379 Paris Cedex 08 (FR)**

(72) Inventeur: **de Sartre, Jean, "THOMSON-CSF" - SCPI 173, bld Haussmann, F-75379 Paris Cedex 08 (FR)**
Inventeur: **Geiger, Erich, "THOMSON-CSF" - SCPI 173, bld Haussmann, F-75379 Paris Cedex 08 (FR)**

(74) Mandataire: **Desperrier, Jean-Louis et al, THOMSON-CSF SCPI 173, Bld Haussmann, F-75379 Paris Cedex 08 (FR)**

(56) Documents cités: (suite)
**Fernsehempfängerschaltungen, pages 280-283 et 294-296**

BUNDESDRUCKEREI BERLIN

## Description

La présente invention concerne un circuit électronique destiné à la réalisation d'alimentations à découpage, soit à usage général, soit destinées aux récepteurs de télévision ainsi que de générateurs de déviation de ligne combinés à l'alimentation à découpage suivant le principe de WESSEL.

Les circuits de commande actuellement connus comportent en général un certain nombre de fonctions axées sur la commande et la régulation du courant fourni:

— référence de tension
— oscillateur (synchronisable)
— amplificateur de régulation
— modulateur de durée d'impulsion
— protection et démarrage progressif

mais aucun ne comporte un étage de puissance suffisante pour commander directement le transistor de commutation. Tous ces circuits connus nécessitent donc, à leur sortie, un transistor intermédiaire, couramment appelé transistor driver, et un transformateur de commande du transistor de commutation. Un tel transformateur ne peut fournir un courant de base correct à la fois positif et négatif, particulièrement lorsque le rapport cyclique varie dans une large proportion comme c'est le cas d'une alimentation à découpage. Le comportement de la coupure du transistor se trouve alors fonction de la durée du courant positif.

En troisième lieu, les circuits de régulation existants ne sont jamais conçus pour s'adapter automatiquement au gain du transistor de commutation, et ne peuvent tenir compte du temps de stockage du transistor pour retarder correctement l'impulsion de courant négatif de base quelque soit ce temps de stockage, s'adaptant automatiquement au transistor de commutation utilisé.

Par exemple, le circuit pour une alimentation à convertisseur décrit dans le document FR - A - 2 285 744 comporte un comparateur de tension dans lequel la tension collecteurémetteur du transistor de commutation est comparée avec une tension de consigne, et le courant de base appliqué au transistor de commutation est coupé lorsque la valeur de la tension de consigne est dépassée. Bien que, dans ce circuit, le transistor de commutation soit commandé par un transistor dit "driver" par une liaison galvanique, le comparateur de tension, cependant, ne prend pas en compte le temps de stockage dans le transistor de commutation, et lui fournit un courant de base positif ou nul, mais jamais négatif, ce qui est le cas du circuit de commande selon l'invention.

Les avantages de l'invention sont nombreux, car les différentes informations représentatives de l'état du système sont traitées par une logique centrale, qui, fonctionnant en processeur de surveillance en fait l'acquisition et les compare, et ne délivre un courant de sortie uniquement que:

— pendant les intervalles de temps autorisés en fonction du courant régulé,
— si le courant primaire n'a pas atteint la limite consignée,
— si le circuit de charge ne fonctionne pas à vide,
— si le courant secondaire du transformateur est terminé,
— si le transistor de commutation est correctement saturé.

Plus précisément il s'agit d'un circuit de commande de puissance, destiné à fournir le courant de base au transistor de commutation d'une alimentation à découpage, ledit transistor de commutation étant destiné à être relié galvaniquement au circuit de commande, caractérisé en ce que son organisation interne comporte, en premier lieu, une partie de circuit de petits signaux qui regroupe des moyens d'acquisition et de traitement d'informations analogiques représentatives de l'état électrique et magnétique de l'alimentation, ces informations étant transformées en informations logiques centralisées dans un processeur central de surveillance qui élabore un premier signal de commande pour la fourniture d'un courant de base positiv au transistor de commutation et un second signal de commande distinct du premier pour l'evacuation d'un courant de base négatif du transistor de commutation, et, en second lieu, une partie de circuit de courant de puissance comprenant un premier étage commandé par le premier signal de commande pour fournir un courant de base positif et un second étage commandé par le second signal de commande pour absorber un courant de base négatif, les sorties réunies de ces étages constituant la sortie du circuit de commande de puissance.

Parmi les avantages présentés simultanément par le circuit de l'invention, on peut citer:

— le couplage direct en continu à la base du transistor de commutation,
— l'adaptation automatique du courant de sortie qui est le courant de base $+ I_B$, en fonction du courant collecteur $I_c$ dans le transistor de commutation, quel que soit son gain, réduisant ainsi la puissance consommée dans la base à la valeur juste nécessaire,
— l'amplitude du courant négatif de base — $I_B$ qui "sort" de la base pendant la désaturation du transistor de commutation, qui est indépendante de l'amplitude et de la durée du courant positif de base $+ I_B$, qui "entre" dans la base pendant les impulsions de commande,
— le contrôle du courant de base $+ I_B$ en vue de faire travailler le transistor de commutation à une tension de saturation ($V_{CE\ sat}$) entre émetteur et collecteur constante,
— la surveillance de la tension de saturation du transistor de commutation pendant le temps de conduction,

— la commande du courant négatif de base après la coupure du courant positif avec un délai dépendant du temps de stockage et déterminé par le moment où le collecteur se désaturant atteint une tension déterminée,

— la protection totale du transistor de commutation due au processeur logique de surveillance qui, à chaque instant, garantit que le courant de base ne peut être interrompu qu'après un temps minimal.

L'invention sera mieux comprise à l'aide de la description suivante et en s'appuyant sur les figures dans lesquelles:

— la figure 1 représente le schéma d'une alimentation à découpage utilisant le circuit objet de l'invention;

— la figure 2 représente le schéma d'une alimentation à découpage utilisant le circuit objet de l'invention;

— la figure 3 représente les formes d'ondes, en tension ou en courant, observées au cours de fonctionnement normal du circuit selon l'invention;

— la figure 4 représente le schéma très simplifié du circuit de commande selon l'invention;

— la figure 5 représente le schéma électrique du modulateur de largeur double permettant d'obtenir le temps minimal de conduction suivant le début de l'impulsion à un instant quelconque;

— la figure 6 représente, sous forme de blocs fonctionnels, le schéma plus détaillé qu'en figure 4 du circuit selon l'invention.

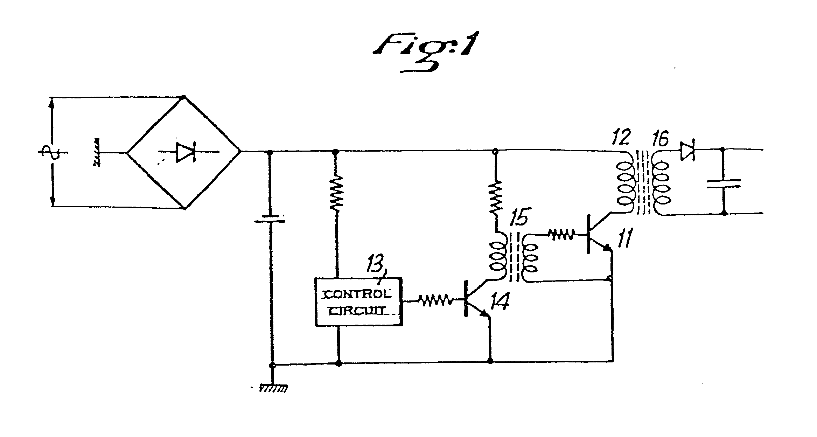

La figure 1 représente, très schématiquement une alimentation à découpage selon l'art connu telle que décrite dans le document FR - A - 2 246 002. La tension d'alimentation, redressée, alimente d'une part un transistor de puissance de commutation 11 à travers l'enroulement primaire 12 d'un transformateur, et d'autre part un circuit de commande 13. Les impulsions de courant issues du circuit 13 n'ont pas une intensité suffisante pour attaquer directement la base du transistor de commutation 11. Ceci nécessite donc un transistor intermédiaire ou driver 14 et un transformateur d'impulsions 15. Lorsque la base du transistor de commutation 11 reçoit une impulsion, le rendant conducteur, un courant traverse le primaire 12 du transformateur, donc un courant prend naissance dans le secondaire 16 sur lequel est branchée la charge d'utilisation. La nécessité de deux composants extérieurs, le transistor driver et le transformateur d'impulsions, présentent de graves inconvénients: comparés au circuit de commande qui est bien souvent intégré en monolithique, ils sont volumineux, dispendieux, de technologie périmée par rapport aux circuits intégrés de puissance; en outre, le transformateur ne peut pas être implanté automatiquement aux chaînes de fabrication.

L'un des avantages du circuit selon l'invention est d'intégrer en sortie, sur le cristal semiconducteur, une partie de puissance suffisante pour alimenter directement la base du transistor de commutation 11, supprimant ainsi le transistor driver 14 et le transformateur 15, la conception de l'étage de sortie du circuit de commande étant telle qu'il peut fournir un courant + $I_B$ jusqu'à + 4 ampères pour rendre conducteur le transistor de commutation, puis absorber un courant — $I_B$ jusqu'à — 4 ampères pendant la désaturation de ce même transistor.

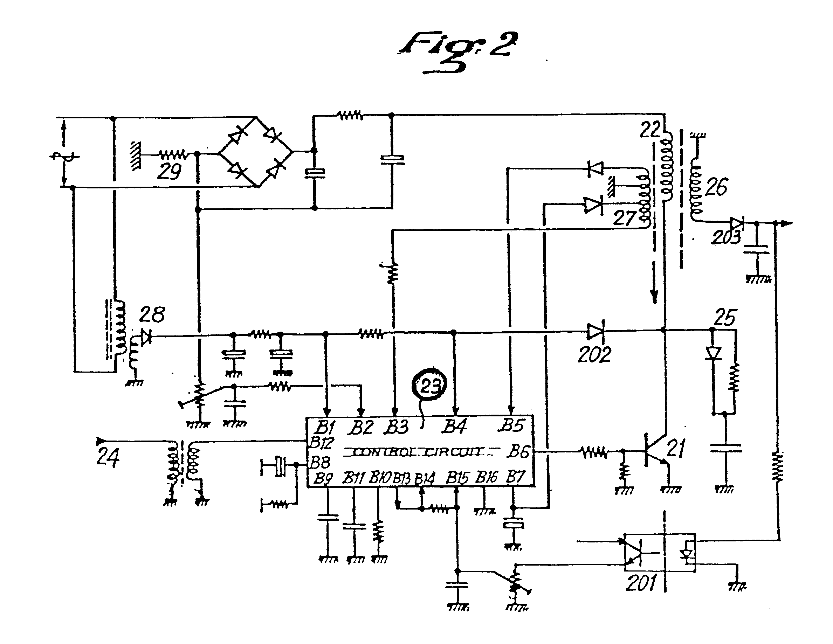

La figure 2 facilitera l'explication du circuit selon l'invention, en montrant un schéma d'application de ce circuit à un modèle d'alimentation à découpage. Par comparaison avec la figure 1, il apparaît que le circuit de commande 23 est directement relié à la base du transistor de commutation 21, sans l'intermédiaire d'un transistor driver ni d'un transformateur d'impulsion. Bien entendu demeure le transformateur d'utilisation, qui comporte, outre l'enroulement primaire 22, un premier enroulement secondaire de charge 26 et un second enroulement secondaire 27, celui-ci fournissant au circuit de commande 23 d'une part la tension d'alimentation $V_{CCB}$ de l'étage de sortie de puissance, d'autre part une information sur l'état magnétique du transformateur.

Le petit transformateur 28 fournit au circuit de commande 23 sa tension d'alimentation $V_{cc}$ qui peut aussi être obtenue par d'autres procédés et le transformateur d'isolement 24 transmet à ce même circuit 23 les impulsions extérieures de synchronisation si le primaire de celui-ci doit être séparé du secteur. En raison du grand nombre d'entrées et de sorties du circuit de commande 23, ses bornes seront identifiées, par la suite, par les repères B1 à B16, qui sont conventionnels.

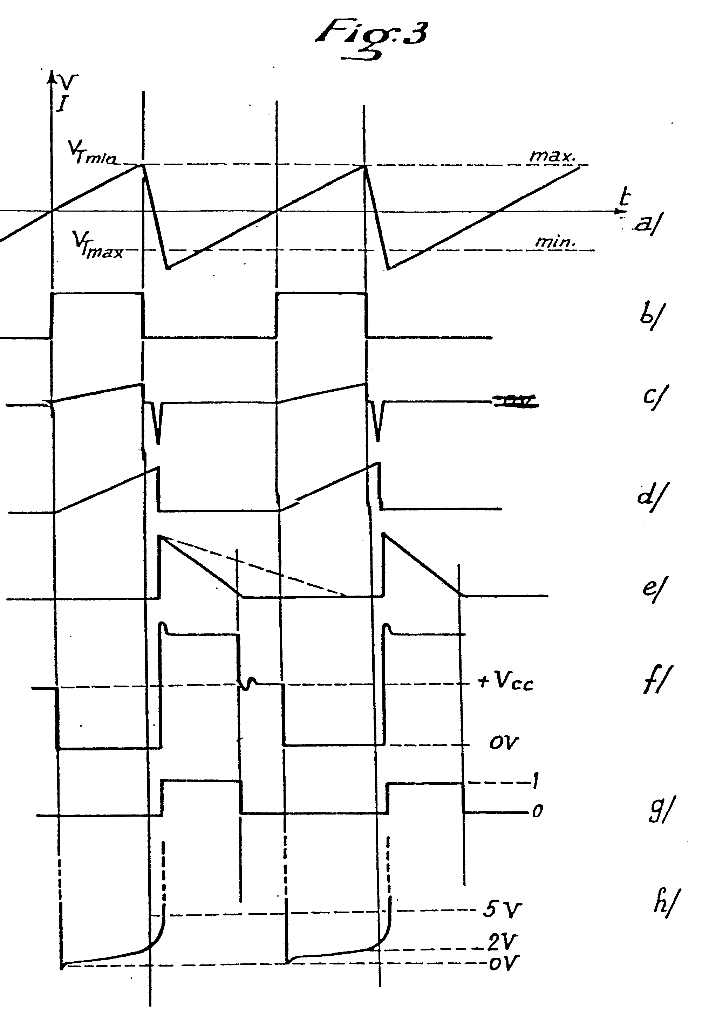

La figure 3 représente les différentes formes d'ondes, en différents points du circuit d'application: le temps, porté en abscisse, est à la même échelle pour tous les graphiques. La façon dont sont générées ces formes d'ondes sera expliquée ultérieurement, mais la comparaison de ces formes de tensions ou de courants permettra par la suite de mieux comprendre le fonctionnement du circuit.

Le graphique 3a représente la tension en dent de scie émise par un générateur, qui agit en base de temps, et qui peut être synchronisé par un signal extérieur transmis par le transformateur 24 de la figure 2. La tension de ces dents de scie est comparée, entre un niveau minimal et un niveau maximal, avec une tension issue d'un amplificateur de régulation: il en résulte, pendant les intervalles où la tension de la dent de scie est croissante, un signal de commande, représenté en 3b. Ce signal, traité par le processeur de surveillance, donne lieu si aucun défaut ne vient l'interdire, à un courant de base + $I_B$ (figure 3c) du transistor de commutation 21, (figure 2). Au courant de base correspond, dans ce même transistor, un courant collecteur $I_c$ (figure 3d), lequel parcourt l'enroulement primaire du transformateur 22 (figure 2) donnant naissance dans le secondaire 26 (figure 2) à un courant secondaire (figure 3e). Sur la figure 3f, la tension au collecteur du transistor de commutation, égale à la tension de saturation de celui-ci quand il conduit, croît jusque environ 2 fois la tension d'alimentation dès que le transistor est bloqué. Lorsque le courant de base est terminé, la **tension de saturation du collecteur remonte progressivement, permettant aux porteurs bloqués** dans le collecteur de s'évacuer vers la base. Lorsque cette tension du collecteur atteint 5,5v, on peut considérer que tous les porteurs sont effectivement évacués (figure 3h). A cet instant un comparateur délivre un signal logique qui autorise le déblocage du courant négatif de base, et de ce fait accélère la coupure du courant collecteur, qui était demeuré conducteur jusqu'à cet instant.

A partir de ce même moment la tension du collecteur continue à croître jusque environ 2 fois Vcc et le courant secondaire démarre. La tension du collecteur demeure à cette valeur tant que dure le courant secondaire qui est une dent de scie décroissante jusqu'à zéro. A ce moment précis la tension du collecteur redescend à +Vcc. Le circuit est libre et n'est plus parcouru par aucun courant. Ce retour de la tension collecteur à +Vcc, est utilisé pour donner une information logique au processeur de surveillance qui bloque la sortie de $I_B$ tant que ce niveau logique (figure 3g) n'est pas revenu à zéro assurant que le courant secondaire est terminé et autorisant le début d'un nouveau cycle de $I_B$.

Si pour une raison quelconque, le courant du secondaire se poursuivait au-delà du début normal du cycle suivant (cas d'une surintensité, ou même d'un cour-circuit de la charge), le courant de base ne pourrait recommencer qu'après la fin du courant secondaire, réduisant le temps du cycle suivant, ou pouvant même supprimer une ou plusieurs périodes. Quand il reçoit l'autorisation de redémarrer le courant de base est alors synchrone de l'oscillateur.

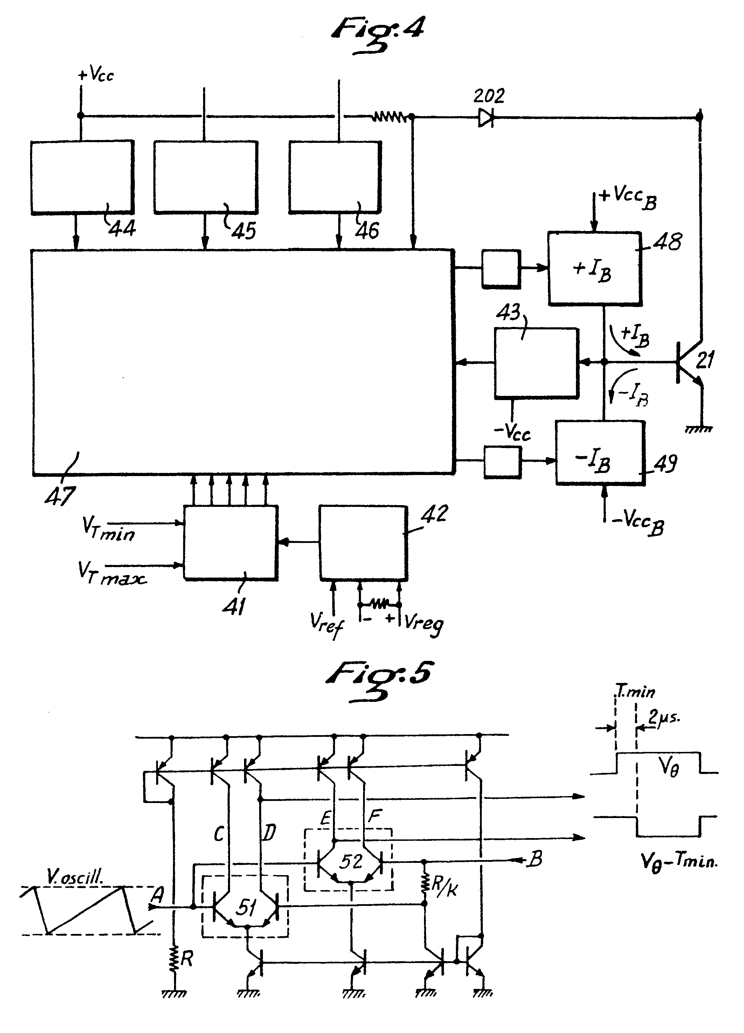

La figure 4, qui représente un schéma très simplifié du circuit de commande selon l'invention, sous forme de blocs fonctionnels, permet de localiser les informations d'état décrites par la figure 3.

Le processeur de veille 47 reçoit des informations générées ou traitées par différentes parties du circuit de commande. Pour éviter des ambiguïtés sur le terme "circuit", ces générateurs d'informations seront conventionnellement désignés, dans la suite du texte, par le terme "bloc". Les informations transmises au processeur 47 proviennent:

— du bloc 41 comprenant le générateur de dent de scie, avec son système de synchronisation, le double modulateur de largeur, où sont élaborés le créneau de largeur variable formé par la comparaison entre la dent de scie et la tension de sortie de l'amplificateur de régulation (bloc 42), le créneau de retour de dent de scie assurant la fin de durée normale du signal de sortie pour la base, le créneau mobile de temps minimal de conduction (Tmin) le créneau de temps maximal (Tmax) et le signal logique +1 apparaissant en cas de dépassement du niveau de comparaison avec la dent de scie. Lorsque le circuit du secondaire fonctionne à vide (système de veille):

— du bloc 44, circuit de contrôle de la tension d'alimentation + $V_{cc}$.

— du bloc 45, amplificateur à seuil qui contrôle le courant émetteur de transistor de commutation, identique au courant global de l'alimentation, ou encore au courant dans l'enroulement primaire 22 du transformateur,

— du bloc 46, comparateur qui surveille l'état du transformateur, plus précisément l'intensité dans l'enroulement secondaire 26.

Le processeur de veille reçoit encore, à travers une diode haute tension 202 extérieure au circuit, une information sur l'état de saturation du collecteur du transistor de commutation pendant la conduction.

A ses sorties, le processeur de veille fournit des impulsions de commande à deux préamplificateurs driver qui agissent sur les deux étages finaux 48 et 49 dont l'un fournit le courant positif et l'autre absorbe le courant négatif transitoire de base du transistor de commutation.

Les informations fournies au processeur de veille seront analysées séparément, en admettant qu'une valeur de tension, d'intensité ou de temps qui n'est pas correcte est traitée par le processeur de surveillance comme un défaut. Pour éclairer le texte, la description de ces informations est détaillée, par la suite, dans des paragraphes numérotés.

1. Tension d'alimentation du circuit + $V_{cc}$

Le bloc 44 est chargé du contrôle de la tension d'alimentation du circuit. A la montée de la tension $V_{cc}$, la sortie du circuit reste bloquée et aucun courant positif ne peut arriver à la base du transistor de commutation tant que $V_{cc}$ est inférieur à 6,25 V.

Au moment du déblocage, quand $V_{cc}$ est supérieur à 6,25 V, l'oscillateur du bloc 41 est déjà bien stabilisé, éventuellement synchronisé (24, figure 2) et le processeur de surveillance capable de fonctionner.

En raison de l'hystérésis du comparateur, environ 0,5 V, c'est lorsque $V_{cc}$ redescend en dessous de 5,75 V que la commande de base est interrompue.

2. Bases de temps

Par convention, seront regroupés sous ce vocable les différents signaux et informations traités par les blocs 41 et 42, et transmis au processeur de veille.

Le bloc 41 comprend en particulier un oscillateur asservi en phase, couramment appelé PLL en raison de son nom anglais "Phase Locked Loop", ainsi qu'un double modulateur de largeur d'impulsion.

L'oscillateur, qui fournit la tension en dent de scie représentée figure 3a, peut être synchronisé directement pendant 30% du temps de retour, à la fin de la dent de scie. Le temps de retour d'une dent de scie est égal à 7,5/100 de la période.

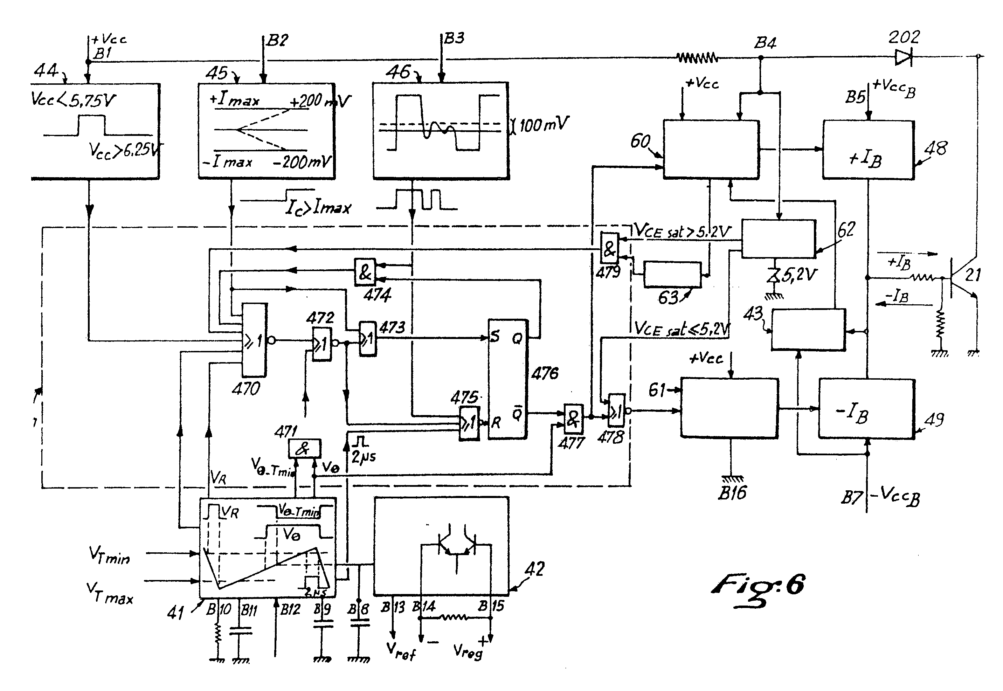

Le double modulateur de largeur d'impulsion est détaillé sur la figure 5. Il est composé de deux comparateurs 51 et 52, dont chacun reçoit simultanément sur une entrée A la même tension en dent de scie de l'oscillateur. Les deux autres entrées sont commandées avec un décalage constant, dû aux résistances R et R/k, par la tension de sortie de l'amplificateur de régulation du bloc 42 appliquée à l'entrée B.

Sélectionnés parmi les quatre signaux disponibles aux bornes C, D, E, F des deux comparateurs, on envoie vers le bloc logique 47 un signal de commande de base $V_\theta$ (front avant variable dans le temps, front arrière fixe et synchrone issu de la borne D) et un signal retardé de 2 $\mu s$: $V_\theta - T_{min} = V_\theta - 2$ $\mu s$, issu de la borne E.2 $\mu s$ est la durée minimale $T_{min}$ d'une impulsion. En effet il est important que le transistor de commutation 21 (figure 2) reste conducteur un temps suffisant pour que le condensateur du réseau de protection RCD 25 (figure 2) puisse se décharger entièrement de façon qu'il ne reste plus de tension à ses bornes au moment de la coupure.

Si on réduit ce temps à zéro on risque que pendant la coupure, le transistor ne retrouve à ses bornes la tension résiduelle du condensateur.

Le bloc 41 reçoit de plus deux tensions $V_{Tmin}$ et $V_{Tmax}$ qui correspondent, respectivement, aux niveaux de comparaison haut et bas de la figure 3a : en effet, à une tension élevée (niveau de comparaison maximum) correspond le temps de conduction minimum sur la dent de scie, donc cette tension est repérée $V_{Tmin}$. Et inversement, $V_{Tmax}$ correspond à la durée de conduction maximale, donc à un niveau de comparaison minimum.

Le bloc 41 fournit encore un signal logique qui apparaît lorsque la tension de sortie de l'amplificateur de régulation dépasse le haut de la dent de scie, amenant le comparateur à travailler au-delà de la plage linéaire de fonctionnement. Comme il a été dit, ce signal logique est considéré comme un défaut et arrête le courant de commande aussi longtemps que le comparateur n'est pas revenu dans la zone linéaire, tout en respectant le temps minimal de conduction (2 $\mu s$), assurant le fonctionnement ou "veille".

Dans le bloc 42 se trouvent rassemblés un générateur de tension de référence, compensé en température, (Vref = 2,4 V) et un amplificateur différentiel de régulation.

Les entrées positive et négative de l'amplificateur différentiel sont accessibles de l'extérieur du circuit ainsi que la référence. Il est ainsi possible de les inverser et de faire fonctionner la régulation en sens inverse (contrôle de l'énergie retournée à la source). Il est également possible de réduire extérieurement le gain de l'amplificateur.

La tension régulée est prélevée, à travers une résistance sur la charge après redressement et filtrage de l'enroulement secondaire 26 (figure 2) et transmis aux bornes d'entrées positive et négative de l'amplificateur différentiel par l'intermédiaire d'un photocoupleur 201 (figure 2) par exemple ou tout autre moyen de séparation de potentiel du secteur.

La tension d'erreur traitée par l'amplificateur différentiel est comparée, dans le bloc 41, entre les niveaux minimum et maximum imposés pour le bon fonctionnement du circuit.

En résumé, la partie du circuit qui a été conventionnellement appelée "base de temps" envoie vers le processeur de surveillance 47 les informations logiques issues de signaux analogiques:

— un signal de commande de base, à fronts raides: $V_\theta$,

— un signal dont le front est retardé de 2 $\mu s$: $V_{\theta-Tmin}$,

— un signal de dépassement de la zone linéaire de régulation,

— un signal correspondant au temps de retour de la dent de scie,

— un signal d'inhibition de 2 $\mu s$, en haut de la dent de scie.

3. Contrôle du courant primaire.

Le bloc 45 contrôle le courant qui traverse l'enroulement primaire 22 du transformateur, c'est à dire également celui qui traverse le transistor de commutation 21.

Il contient un amplificateur à seuil symétrique par rapport à la masse, et compensé en température, sensible à 0,2 volt positif et négatif, prélevé aux bornes d'une faible résistance 29 (figure 2) montée en série dans le circuit de retour au pôle négatif de l'alimentation de puissance. Selon que le point commun est l'émetteur du transistor ou le pôle négatif de l'alimentation, le signal en dent de scie aux bornes de la résistance est positif ou négatif, c'est pourquoi l'entrée d'information est sensible dans les deux sens.

La sortie de ce bloc 45 fournit un niveau logique 1 dès que le courant atteint la valeur absolue maximale consignée.

4. Contrôle du courant secondaire

En plus de l'information de la tension secondaire transmise à l'amplificateur de régulation 42 à travers un photo-coupleur ou tout autre moyen, l'invention prévoit un autre enroulement secondaire 27 (figure 2), dont une partie assure l'alimentation $\pm V_{CCB}$ des étages de sortie du circuit 23, permettant de disposer d'un courant de sortie de 4 ampères et d'alimenter directement la base du transistor de commutation, et dont une autre partie envoie vers le bloc 46, à travers une résistance de valeur élevée, une tension représentative du courant qui traverse les enroulements secondaires du transformateur, et notamment l'enroulement d'utilisation 26 isolé et ramené à la tension de référence 0 du circuit.

Le bloc 46 contient un comparateur, sensible à $\pm$ 0,1 V et pouvant accepter une tension négative (entrée P.N.P.).

Ce comparateur surveille le courant secondaire: toute la charge stockée dans le transformateur pendant le courant primaire est évacuée par le secondaire: on surveille l'instant de la fin du courant secondaire qui se manifeste par le changement d'état de la tension du primaire et à ce moment le circuit logique 47 reçoit une information sans la présence de laquelle la période suivante du courant de base du transistor de commutation ne pourra avoir lieu.

Ceci garantit la sécurité du transistor de commutation en cas de surintensité ou de court-circuit du secondaire.

Donc, tant que le secondaire 26 du transformateur débite un courant, la tension d'entrée sur le comparateur du bloc 46 fournit au bloc logique 47 une information logique +1 qui bloque la sortie.

La transition de tension collecteur de $V_m$ à $V_{cc}$ peut parfois présenter des rebondissements. Ramené à la référence 0, cela veut dire que le premier passage 0 que l'on veut détecter peut être suivi de 1 ou 2 petits créneaux mais ceux-ci sont éliminés par le bloc logique qui ne prend en considération que le premier passage à zéro de la tension du secondaire 26.

5. Processeur de veille et de surveillance

Dans le bloc 47 se trouve réalisé un processeur de surveillance qui, à tout instant, sous l'influence de tout défaut de fonctionnement, contrôle l'interruption du courant de base. Ainsi il garantit la complète sécurité du transistor de commutation.

La fonction du processeur de surveillance 47 sera plus aisément comprise en s'appuyant sur la figure 6, qui donne, sous forme de blocs fonctionnels, le schéma complet du circuit selon l'invention. Cependent, la figure 6 sera utilement étudiée en liaison avec la figure 4 qui est un schéma simplifié de ce circuit, ainsi qu'avec la figure 2 qui montre un exemple d'application du circuit: les bornes de connexions B1 à B16 du circuit 23 de la figure 2 sont reportées sur la figure 6.

Les points suivants sont importants:

a) le transistor recevra toujours un courant de base d'une durée minimale de 2 $\mu$s dans toute l'étendue du domaine de régulation.

b) si un défaut, par exemple un court-circuit de la charge ou une surcharge de celle-ci survient pendant les deux premières microsecondes de la conduction, le courant de base ne sera interrompu que après ces premières 2 $\mu$s. Comme il a été dit précédemment ces deux microsecondes sont nécessaires pour décharger le condensateur du réseau RCD 25 à travers le transistor. Si au contraire, le défaut survient après ces 2 $\mu$s, et jusqu'à ce que le courant collecteur $I_c$ ait atteint sa valeur maximale $I_{cmax}$ la coupure du courant de base est alors instantanée.

c) à la fin de chaque période du courant collecteur, l'oscillateur fournit un signal logique $V_R$ qui se comporte comme un défaut et arrête toujours la commande de base au même instant du cycle. Une mémoire emmagasine toutes ces informations de défauts présentes durant le cycle (par exemple surcharge momentanée ...) décelées par la surveillance du courant du transistor, ou du transistor, ou du courant secondaire, ou par l'amplificateur de régulation (dépassement).

A chaque cycle, avant qu'un courant ne puisse parvenir à la base du transistor de commutation, au moment même de l'apparition du front avant du signal $V_\theta$ qui doit commander ce courant, le processeur de veille contrôle qu'aucun défaut ne l'interdit.

La bascule chargée de cette opération ne pourra basculer que si:

1) le courant secondaire est nul (information provenant du bloc 46)

2) le courant primaire est inférieur au courant collecteur maximum consigné (information provenant du bloc 45)

3) l'amplificateur de régulation est dans sa zone linéaire de régulation (signal minimal) (information venant du bloc 41).

Si toutes ces conditions sont remplies, le signal parvient à l'étage driver qui actionne l'étage final 48 (+ $I_B$).

Les problèmes dus aux court-circuits, au fonctionnement à vide, ainsi que le contrôle de la désaturation du transistor sont traités par le processeur de veille de la façon suivante:

a) court-circuit au secondaire

En cas de court-circuit pendant le temps de conduction du secondaire, la tension aux bornes de celui-ci ne dépasse pas 0,9 V qui est la tension directe de la diode de redressement 203 (figure 2) avec un courant de 6 A environ.

Il faut alors un long temps qui peut normalement durer plusieurs périodes, pour évacuer par le secondaire l'énergie magnétique accumulée dans le transformateur.

Pendant tout ce temps, le courant primaire reste bloqué par le contrôle apériodique du courant secondaire, par le bloc 42. Sans cela, la quasi totalité de l'énergie amenée périodiquement par le courant primaire viendrait s'ajouter à celle déjà stockée et le transformateur atteindrait rapidement la saturation.

Au cours de la mise sous tension, le transistor et le transformateur travaillent à charge maximale. Le circuit de charge se comporte alors comme unn court-circuit du secondaire et assure donc le démarrage progressif en chargeant le condensateur du filtre secondaire par des impulsions de courte durée, avec un taux de conduction très faible.

Le transistor de commutation fonctionne ainsi par intermittance recevant des impulsions isolées de commande de base, synchrones de l'oscillateur.

En pratique cela signifie qu'après une période de surcharge, pendant "n" périodes de l'oscillateur, le circuit ne délivre plus de courant de base, tout en respectant la durée minimale, jusqu'à ce que le processeur logique autorise à nouveau un courant de base.

Il apparaît ainsi que le circuit se charge de limiter le transfert d'énergie à une valeur constante choisie dépendant de la self primaire du transformateur.

b) fonctionnement avec le secondaire à vide

Dans le cas où aucune énergie n'est prélevée au secondaire, la tension secondaire pourrait atteindre une valeur très élevée s'il n'existait pas un circuit électronique de surveillance. Pour éviter cet inconvénient, dans la plupart des circuits existants, il est prévu une surveillance de la tension secondaire qui coupe le courant primaire lorsqu'il y a surtension. Mais cette sorte de contrôle est incertaine en raison de la séparation secteur, car, lorsque le secondaire travaille à vide, ou à charge minimale, l'amplificateur de régulation tend à réduire à zéro le temps de conduction de la base, donc aussi la durée du courant collecteur, en raison de l'excédent d'énergie: c'est-à-dire que le temps de passage du courant peut alors devenir très étroit et même s'annuler, faisant travailler le transistor de commutation dans des conditions mal définies.

Dans le circuit selon l'invention, cette fonction de contrôle de la surtension secondaire est également assurée par le processeur de veille 47.

A la fin de l'excursion linéaire de la plage de régulation, au moment précis où la durée du signal de commande devient égale au temps minimal, un autre comparateur dans le bloc oscillateur 41 délivre un signal qui se comporte comme un signal de défaut. La commande normale de base est alors interrompue, tout en respectant la durée minimale (2 $\mu$s). Elle demeure ainsi interrompue jusqu'à ce que l'amplificateur de régulation revienne dans la zone de fonctionnement linéaire autorisée. La nouvelle commande de base est alors bien synchrone de l'oscillateur et a toujours une durée d'au moins 2 $\mu$s.

c) contrôle de la désaturation du transistor pendant la conduction.

Par l'intermédiaire de la connexion extérieure B4 d'alimentation du driver de l'amplificateur + $I_B$ 48, on peut introduire dans le circuit un signal donnant une information sur l'état de saturation du transistor de commutation en reliant ce point B4 au collecteur de ce transistor par une diode haute tension 202, dont la chute de tension directe est $V_D$.

La tension au collecteur du transistor driver pendant la période de conduction est liée à la tension collecteur/émetteur du transistor de commutation en régime de saturation et égale à:

$$V_{CE\ sat} + V_D$$

Si cette tension dépasse 6V pendant la conduction, le bloc logique interrompt la commande de base en respectant le temps minimal de conduction, car il reçoit un signal de défaut provenant du comparateur 62 qui compare la tension du transistor de commutation à une tension de référence 5,2 V.

d) contrôle de l'amplitude instantanée du courant de base

Grâce à cette limitation de la tension collecteur du transistor driver, qui est liée à la tension de saturation du transistor de commutation par la diode haute tension, en direct pendant la conduction, la base du transistor de commutation ne reçoit à chaque instant que le courant juste nécessaire pour obtenir au collecteur cette tension de saturation: elle ne peut être saturée au-delà de ce qui est nécessaire. Les pertes par la base sont donc réduites au minimum, et le courant de base croît en fonction du courant collecteur qui est une dent de scie.

e) contrôle du temps de désaturation du collecteur avant l'extraction des porteurs de la base

Après la fin du courant positif de base + $I_B$, il faut attendre le début de la désaturation du collecteur pour que le courant négatif — $I_B$ puisse commencer.

Le comparateur 62 détecte cette désaturation à travers la diode 202 et dès l'apparition du signal logique correspondant, le courant — $I_B$ est débloqué, permettant l'évacuation des porteurs de la base.

Le contrôle du début du courant négatif permet au transistor de commutation de travailler ainsi dans des conditions de temps de coupure et de pertes de commutation minimales.

f) conduction simultanée

Ces conditions de contrôle du fonctionnement du transistor de commutation sont complétées par un circuit 43 d'inhibition de conduction simultanée, destiné à empêcher les étages finaux l'un 48 fournissant un courant + $I_B$, l'autre 49 absorbant un courant — $I_B$ de conduire simultanément au début du cycle. Ce circuit d'inhibition est complété par une temporisation 63 qui empêche l'action du contrôle de saturation au début du cycle de conduction de $I_B$ pendant au moins toute la durée de l'inhibition de conduction simultanée. Sinon un défaut bref correspondant au temps de l'inhibition serait adressé à la logique au moment même du début du signal de base.

g) circuit logique du processeur de veille

Le processeur de veille est composé d'un circuit OU—NON 470 qui reçoit, comme il a déjà été dit, six informations de défauts:

— contrôle de la tension d'alimentation (bloc 44)

— contrôle du courant primaire (bloc 45)

— contrôle du courant secondaire (bloc 46).

Cette information parvient au circuit 470 à travers une porte ET 474 et un circuit OU—NON 475 et une bascule RS 476, ces deux derniers assurant l'élimination des rebondissements.

— contrôle de la désaturation du transistor de commutation pendant la conduction. Elle parvient au circuit 470 à travers le comparateur 62 et une porte ET 479 introduisant l'information du temps de conduction $V_\theta$.

— contrôle de la fin de chaque cycle normal de + $I_B$ (bloc 41)

— contrôle de limite de zone linéaire de régulation (veille) (bloc 41).

Une porte ET 471 introduit dans la logique les informations $V_\theta$ et $V_\theta$ — Tmin, déterminant le temps minimum de conduction quelle que soit la phase du début de conduction, provenant du bloc 41, à un circuit OU—NON 472, celui-ci recevant sur son autre entrée l'information de sortie du sextuple OU—NON 470. Si aucun défaut n'est constaté, le signal issu de 472 est envoyé parallèlement à une porte OU 473, qui contrôle en permanence la surintensité du courant primaire, et à un circuit OU—NON 475, à trois entrées, qui reçoit sur ses deux autres entrées, d'une part, une inhibition de 2 $\mu$s en fin de cycle provenant du bloc 41, d'autre part, l'information d'interdiction pendant la durée du courant secondaire, issu du bloc 46. La sortie de la porte OU 473 ainsi que la sortie du circuit OU—NON 475 sont connectées, respectivement, aux deux entrées "set" et "reset" d'une bascule RS 476. Donc à chaque période, la bascule teste au moment même du début du signal $V_\theta$, si aucun défaut n'est présent dans sa mémoire. Dans ce cas, la sortie $\bar{Q}$ de la bascule et un signal $V_\theta$, issu directement du bloc 41, sont adressés à une porte ET 477, qui autorise la sortie d'un signal vers les préamplificateurs driver 60 et 61. L'interruption de celui-ci par un défaut ne pouvant avoir lieu avant une durée de conduction inférieure à $\theta_{min}$.

Le driver 60, qui commande le courant + $I_B$, est actionné directement à partir de la porte ET 477. Le driver 61, qui commande le courant — $I_B$, est actionné à travers un circuit OU—NON 478, lui-même contrôlé par le comparateur 62 d'état de désaturation du transistor de commutation 21.

Le circuit de commande selon l'invention a été décrit, notamment à l'aide des figures 2, 4 et 6, comme circuit de commande d'une alimentation à découpage. Toutefois, comme il a été dit précédemment, il convient également à toute autre application telle que des informations sur l'état du courant à commander et du courant commandé puissent être adressées au processeur de veille. La présence d'un transformateur n'est pas indispensable, et les informations peuvent provenir d'autres capteurs.

La commande du balayage ligne en télévision est un type d'application de ce circuit de commande, parmi d'autres possibles.

Le circuit nécessite pour son fonctionnement quelques composants extérieurs, représentés notamment sur les figures 2 et 6. Ces composants, qui ne sont pas identifiés, ni décrits dans le texte, font partis de l'art connu sur le fonctionnement de dispositifs tels qu'oscillateurs, amplificateurs de régulation ou comparateurs par exemple. Cependant, il est remarquable que le circuit ne comporte que peu de composants extérieurs, des capacités en particulier: ce sont les composants qui ne sont pas intégrables, car la conception du circuit permet de l'intégrer de façon monolithique, sur un cristal semiconducteur.

## Revendications

1. Circuit de commande de puissance, destiné à fournir le courant de base ou transistor de commutation (21) d'une alimentation à découpage, ledit transistor de commutation étant destiné à être relié galvaniquement au circuit de commande, caractérisé en ce que son organisation interne comporte, en premier lieu, une partie de circuit de petits signaux qui regroupe des moyens (41, 42, 43, 44, 45, 46) d'acquisition et de traitement d'informations analogiques représentatives de l'état électrique (par 44 et 45) et magnégtique (par 46) de l'alimentation, ces informations étant transformées en informations logiques centralisées dans un processeur central de surveillance (47) qui élabore un premier signal de commande pour la fourniture d'un courant de base positiv au transistor de commutation et un second signal de commande distinct du premier pour l'évacuation d'un courant de base négatif du transistor de commutation, et, en second lieu, une partie de circuit de courant de puissance comprenant un premier étage (60, 48) commandé par le premier signal de commande pour fournir un courant de base positif et un second étage (61, 49) commandé par le second signal de commande pour absorber un courant de base négatif, les sorties réunies de ces étages constituant la sortie du circuit de commande de puissance.

2. Circuit de commande selon la revendication 1, caractérisé en ce que les informations analogiques acquises et traitées par le processeur de surveillance (47) sont la tension d'alimentation du circuit, l'intensité contrôlée par le circuit, la fin de chaque cycle du courant de base du transistor de commutation, la fin d'utilisation du courant commandé par le circuit, l'état de saturation du transistor de commutation, et le dépassement, en cas de fonctionnement à vide, des limites de la zone linéaire de régulation.

3. Circuit de commande selon la revendication 1, caractérisé en ce qu'il comporte une base de temps (41 et 42) connectée au processeur de surveillance (47) qui assure un courant de sortie d'une durée au moins égale au temps de décharge, à travers le transistor de commutation (21), du condensateur de protection (25) de ce transistor.

4. Circuit de commande selon la revendication 1, caractérisé en ce que le courant de base positif fourni par le premier étage de puissance est asservi, par contre-réaction dans le circuit, au courant collecteur et au gain du transistor de commutation (21).

5. Circuit de commande selon la revendication 1, caractérisé en ce qu'un comparateur (62) contrôle en permanence la tension de saturation du transistor de commutation (21) pendant sa conduction et, en cas de dépassement d'une tension de référence de consigne, agit sur le processeur de surveillance (47) pour déclencher le second signal de commande.

6. Circuit de commande selon la revendication 1, caractérisé en ce qu'un autre comparateur (43), associé à un circuit de temporisation (25), empêche la conduction simultanée des deux étages de puissance (48 et 49).

7. Circuit de commande selon les revendications 1 à 6, caractérisé en ce que ses parties constitutives sont fabriquées simultanément sous forme d'un circuit monolithique intégré sur un seul cristal semiconducteur.

8. Dispositif de balayage ligne en télévision, caractérisé en ce qu'il utilise un circuit de commande selon l'une des revendications 1 à 7.

9. Dispositif de réception de télévision, caractérisé en ce qu'il comporte au moins une alimentation à découpage selon le circuit de commande de l'une des revendications 1 à 8.

10. Dispositif de réception de télévision, caractérisé en ce qu'il comporte un dispositif de balayage ligne selon la revendication 8.

## Patentansprüche

1. Leistungssteuerstromkreis, der den Schalttransistor (21) eines Stoßstromspeisesystems mit Basisstrom versorgt, wobei der Schalttransistor dazu bestimmt ist galvanisch mit dem Steuerstromkreis verbunden zu sein, dadurch gekennzeichnet, daß sein innerer Aufbau einerseits einen Kleinsignalstromkreisabschnitt mit Mitteln (41, 42, 43, 44, 45, 46) zum Erfassen und Verarbeiten von analogen, den elektrischen (durch 44 und 45) und magnetischen (durch 46) Zustand des Stromspeisesystems darstellenden Informationen, wobei diese Informationen in logische Informationen umgewandelt werden, die in einem zentralen Steuerdatenverarbeiter (47) zentralisiert werden, der ein erstes Steuersignal für die Lieferung eines positiven Basisstroms an den Schalttransistor erstellt und ein zweites, von dem ersten verschiedenes Steuersignal für die Evakuierung eines negativen Basisstroms des Schalttransistors und andererseits einen Leistungsstromkreisabschnitt enthält, welcher eine erste durch das erste Steuersignal gesteuerte Stufe (60, 48) zur Lieferung eines positiven Basisstroms und eine zweite durch das zweite Steuersignal gesteuerte Stufe (61, 49) zur Absorption eines negativen Basisstroms enthält, wobei die vereinten Ausgänge dieser Stufen den Ausgang des Leistungssteuerstromkreises bilden.

2. Steuerstromkreis nach Anspruch 1, dadurch gekennzeichnet, daß die durch den Steuerdatenverarbeiter (47) erfaßten und verarbeiteten Analoginformationen die Speisespannung des Kreises, die vom Stromkreis gesteuerte Stromstärke, das Ende jedes Basisstromzyklus des Schalttransistors, das Ende der Abnahme des vom Stromkreis gesteuerten Stromes, der Sättigungszustand des Schalttransistors und im Leerlauf die Überschreitung der Grenzen des linearen Regelbereichs sind.

3. Steuerstromkreis nach Anspruch 1, dadurch gekennzeichnet, daß er eine Zeitbasis (41 und 42) enthält, die mit dem Steuerdatenverarbeiter (47) geschaltet ist, der einen Ausgangsstrom von einer Dauer liefert, die wenigstens gleich der Zeit des über den Schalttransistors (21) erfolgenden Entladens des Schutzkondensators (25) dieses Transistors ist.

4. Steuerstromkreis nach Anspruch 1, dadurch gekennzeichnet, daß der von der ersten Leistungsstufe gelieferte positive Basisstrom durch Gegenkopplung im Stromkreis vom Kollektorstrom und dem Gewinn des Schalttransistors (21) gesteuert wird.

5. Steuerstromkreis nach Anspruch 1, dadurch gekennzeichnet, daß ein Komparator (62) die Sättigungsspannung des Schalttransistors (21) während dessen Leitfähigkeitsphase ununterbrochen steuert und im Fall der Überschreitung einer Sollwertspannung auf den Steuerdatenverarbeiter (47) einwirkt, um ein zweites Steuersignal auszulösen.

6. Steuerstromkreis nach Anspruch 1, dadurch gekennzeichnet, daß ein anderer, mit einem Verzögerungsstromkreis (25) zusammenwirkender Komparator (43) verhindert, daß beide Leitungsstufen (48 und 49) gleichzeitig leitfähig werden.

7. Steuerstromkreis nach den Ansprüchen 1 bis 6, dadurch gekennzeichnet, daß seine Bestandteile gleichzeitig in Form eines auf einem einzigen Halbleiterkristall angeordneten, integrierten Monolithstromkreises hergestellt werden.

8. Fernsehzeilenabtastvorrichtung, dadurch gekennzeichnet, daß sie einen Steuerkreis nach einem der Ansprüche 1 bis 7 verwendet.

9. Fernsehempfangsvorrichtung, dadurch gekennzeichnet, daß sie wenigstens ein Stoßstromspeisesystem entsprechend dem Steuerstromkreis nach einem der Ansprüche 1 bis 8 enthält.

10. Fernsehempfangsvorrichtung, dadurch gekennzeichnet, daß sie eine Zeilenabtastvorrichtung nach Anspruch 8 enthält.

## Claims

1. Power control circuit, adapted to supply the base current for the switching transistor (21) of a chopped current source, the said switching transistor being intended to be galvanically connected to the control circuit, characterized in that its internal lay-out comprises firstly, a minor signals circuit portion for gathering means (41, 42, 43, 44, 45, 46) for acquisition and processing of analog data representative of the electric state (by 44 and 45) and the magnetic state (by 46) of the current source these datas being converted into logic datas centralized in a central monitoring processor (47) that elaborates a first control signal to supply a positive base current to the switching transistor and a second control signal, distinct from the first, to evacuate the negative base current from the switching transistor and, secondly, a part of the power current circuit comprising a first stage (60, 48) controlled by the first control signal to supply a positive base current and a second stage (61, 49) controlled by the second control signal to absorb a negative base current, the coupled outputs of these stages constituting the output of the power control circuit.

2. Control circuit according to claim 1, characterized in that the analog data acquired and processed by the monitoring processor (47) are the supply voltage of the circuit, the amperage controlled by the circuit, the end of each cycle of base current of the switching transistor, the end of the utilization of the current controlled by the circuit, the saturation state of the switching transistor, and, in case of no-load, the overswing of the limits of the linear regulation zone.

3. Control circuit according to claim 1, characterized in that it comprises a time base (41 and 42) connected to the monitoring processor (47) that ensures an output current of a duration at least equal to the discharge time, through the switching transistor (21), of the protection capacitor (25) of this transistor.

4. Control circuit according to claim 1, characterized in that the base positive current supplied by the first power stage is controlled by means of a negative feedlock in the circuit, by the collector current and the gain of the switching transistor (21).

5. Control circuit according to claim 1, characterized in that a comparator (62) controls permanently the saturation voltage of the switching transistor (21) during its conduction and when a selected reference voltage is exceeded acts on the monitoring processor (47) so as to interrupt the second control signal.

6. Control circuit according to claim 1, characterized in that another comparator (43), associated to a timing-circuit (25), prevents simultaneously the two power stages (48 and 49) from being conductive.

7. Control circuit according to claims 1 to 6, characterized in that its components are simultaneously manufactured in the form of an integrated monolithic circuit provided on a single semiconductor crystal.

8. Television line scanning device, characterized in that it uses a control circuit according to one of claims 1 to 7;

9. Television receiving device, characterized in that it comprises at least one chopped current source according to the control circuit of one of claims 1 to 8.

10. Television receiving device, characterized in that it comprises a line scanning device according to claim 8.

Fig.1

Fig. 2

Fig. 3

15

*Fig.4*

*Fig.5*

Fig:6